# EUROPÄISCHE PATENTSCHRIFT

(11) **EP 2 792 445 B1**
(45) Veröffentlichungstag und Bekanntmachung des Hinweises auf die Patenterteilung: **25.07.2018**
(21) Anmeldenummer: 13164327.2
(22) Anmeldetag: 18.04.2013
(51) Int. Cl.: B23K 20/12

(54) **Hohlprofilverbindung unter Verwendung des Reibrührschweissens**
Hollow profile connection using a friction stir welding process
Liaison à profil creux utilisant le procédé de soudage par friction-malaxage

(43) Veröffentlichungstag der Anmeldung: 22.10.2014
(73) Patentinhaber: Magna Steyr Fahrzeugtechnik AG & Co KG, 8041 Graz (AT)
(72) Erfinder: Hofer, Bernhard, 8053 Graz (AT); Zachnegger, Harald, 8041 Graz (AT)
(74) Vertreter: Zangger, Bernd

(56) Entgegenhaltungen:
- DE-A1- 10 011 593
- NL-C2- 1 019 889
- US-A1- 2001 004 992

## Beschreibung

### Gebiet der Erfindung

Die vorliegende Erfindung betrifft eine Hohlprofilverbindung der Art, wie sie in Anspruch 1 wiedergegeben ist.

### Stand der Technik

Die Verbindung von metallischen Hohlprofilen erfolgt häufig und effektiv mittels Knotenblechen, welche zwischen den Profilen angeordnet und anschließend durch Verschweißungen mit diesen verbunden werden. Im Kraftfahrzeugbau werden aus Gewichtsgründen meist Hohlprofile aus Aluminium verwendet, die Knotenbleche sind ebenfalls aus Aluminium gefertigt.

Bei der Ausführung der üblichen Verschweißungen kommt es zu einem hohen Wärmeeintrag, der einen Verzug des Zusammenbaues verursacht. Die Maßhaltigkeit wird negativ beeinflusst. Um flächige und somit stabile Verbindungen herzustellen, müssen Löcher in die Bleche eingebracht werden, um Lochschweißungen auszuführen. Beim Schweißen kommt es ferner zu Schweißspritzern, die von den Flächen aufwändig entfernt werden müssen.

Mittels Reibrührschweißen, dem indirekten Reibrührschweißen lassen sich Bleche aus Aluminium bei niedrigem Wärmeeintrag miteinander verbinden. Die Bleche werden übereinander gelegt und das Reibrührschweißwerkzeug wird auf die Oberseite des einen Bleches mit Druck aufgesetzt und entlang einer vorgesehenen Verbindungslinie verfahren. Es ergibt sich eine Verbindung. Eine Anwendung bei Hohlprofilen ist jedoch nicht möglich.

Die DE 10 2010 018 504 A1 beschreibt ein Herstellverfahren eines Hohlprofils unter Anwendung des Reibrührschweißens. Ein Halbzeug aus einer Aluminiumlegierung wird entlang einer Verbindungslinie mittels einer durch Reibrührschweißen ausgeführten Schweißung verbunden. Während des Schweißens wird ein Gegenhalter in das Profil eingeführt, der die Schweißzone von der Unterseite her stützt.

Das Verschweißen von zwei in einer Ebene liegenden Blechen entlang deren Kontaktlinie mittels Reibrührschweißen beschreibt die DE 10 2010 003 742 A1.

Die Verbindung zweier in einer Ebene aneinander angrenzender Bleche auf einem Hohlprofil zeigt die JP 2004261859 A. Mittels eines Werkzeuges werden die Bleche entlang der einen Spalt bildenden Grenze durch Reibrührschweißen miteinander verschweißt - gleichzeitig wird noch ein Metallstreifen in den Spalt eingelegt.

Die Herstellung eines Hohlprofilteiles unter Zusammenfügung von zwei Formteilen sowie der Verbindung der Formteile mittels Reibrührschweißen entlang der Fügelinie zeigt die JP2001233208 A.

Ein Verfahren zur Herstellung einer verwindungsarmen Rahmenstruktur in Überlappschweißung zeigt die DE 100 11 593 A1. Hier dient als Verbindungselement für drei Rohre ein T-förmiges Knotenstück, welches in die zu verbindenden Rohrenden eingesteckt wird. Der das eingeführte Knotenstück überlappende Rohrendbereich wird mittels eines umlaufenden Werkzeuges reibrührverschweißt, so dass sich das Rohrmaterial mit dem Material des Knotenstückes im Sinne einer Reibrührverschweißung verbinden kann.

Die Verbindung von Profilteilen mittels Reibrührschweißen beschreibt auch die JP11226759 A. Die miteinander zu verbindenden Teile werden zueinander ausgerichtet, ein die beim Reibrührschweißen auftretenden Druckkräfte aufnehmendes Druckstück im Kontaktbereich der Teile wird mit verschweißt.

Die US 2001/004992 A1 offenbart ein Verfahren zum Reibrührschweißen eines Strukturkörpers, wobei das Verfahren umfasst: Bereitstellung von zwei Hohlkörpern, wobei jeder Hohlkörper zwei Stirnplatten aufweist, die durch eine Vielzahl von Rippen miteinander verbunden sind und Verschweißen der Stirnplatten durch Reibrührschweißen.

Aus der NL 1 019 889 C2 ist bekannt, dass eine erste Oberfläche eines ersten Konstruktionselements mit einer ersten Oberfläche eines zweiten Konstruktionselements durch Reibrührschweißen verbunden wird.

### Zusammenfassung der Erfindung

Es ist eine Aufgabe der Erfindung, eine Hohlprofilverbindung in gegenüber den bekannten Arten verbesserter Ausführung vorzuschlagen.

Die Lösung der Aufgabe erfolgt durch die Merkmale von Anspruch 1. Weiterbildungen ergeben sich aus den Unteransprüchen.

Erfindungsgemäß ist zur Verbindung von wenigstens zwei Hohlprofilen wenigstens ein Knotenblech vorgesehen, welches die Hohlprofile in deren Endbereich im Außenbereich kontaktiert, wobei die Endbereiche der Hohlprofile rohrförmig ausgestaltet sind, mit einem einsetzbaren, Rippen aufweisenden Profilteil, so dass die Endbereiche der Hohlprofile im Querschnitt ein durch Stege bzw. Rippen gebildetes Profil aufweisen, wobei Knotenblech und Hohlprofilteil durch eine Reibrührschweißverbindung miteinander verbunden sind. Die durch Reibrührschweißen erzeugten Verbindungen zwischen Knotenblech und Hohlprofil verlaufen entlang der Rippen bzw. Stege, also in Erstreckungsrichtung des jeweiligen Hohlprofils genau in dem Bereich, der durch den Steg, die Rippe entsprechend druckfest ist. Die durch Reibrührschweißen erzeugten Verbindungen können punktuell und/oder kontinuierlich und/oder linienförmig ausgeführt sein.

In die Enden der Hohlprofile werden Profile eingesetzt, welche die benötigte Druckfestigkeit ergeben.

Die in die Enden der Hohlprofile eingeführten Profilteile sind vorzugsweise als X-, Stern- oder H-förmige Struktur ausgebildet, wobei deren Außenbemaßung an die Innenkontur des Hohlprofils angepasst ist. Vorzugsweise ist das Profilteil als ein Aluminium-Guss, Strangpress oder Strangguss-Teil hergestellt. Die in vorgesehener Anzahl im Wesentlichen radial nach außen ragenden Rippen weisen nach dem Einführen in das Profil einen Kontakt mit der Innenseite des Profils auf und vermögen so einen von der Außenseite auf das Hohlprofil ausgeübten Druck aufzunehmen.

Das Knotenblech wird mit dem Hohlprofil und dem eingesetzten Profilteil mittels wenigstens einer Reibrührschweißung verbunden. Die Reibrührschweißung verläuft entlang einer der Rippen, welche im Inneren des Hohlprofils Kontakt mit diesem haben. Bevorzugt werden mehrere Reibrührschweißungen entlang der innen das Hohlprofilteil kontaktierenden Rippen ausgeführt.

Der Knotenbereich, der die wenigstens zwei Hohlprofile miteinander verbindet, kann durch zwei Knotenbleche gebildet sein, wobei diese in Form von zwei Halbschalen die Enden der Hohlprofile umfassend zusammengesetzt werden. Die Reibrührschweißungen sind dabei im Bereich der Hohlprofilüberlappung entlang der Rippen der eingesetzten Profilteile ausgeführt. Zusätzlich sind auch Reibrührschweißungen im Kontaktbereich der Knotenbleche ausgeführt. Diese weisen bevorzugt ein oder mehrere als Kontakt- und Verbindungsstreifen gestaltete Berieche auf, in denen die der Verbindung dienenden Reibrührschweißungen ausgeführt werden können.

Eine Weiterbildung der Erfindung sieht vor, dass zusätzlich zu dem Knotenblech ein Knotenelement, ausgeführt als Gussknotenteil in die Enden der Hohlprofile eingesetzt wird. Die in die Enden der Hohlprofile eingesetzten Abschnitte sind in der gleichen Weise ausgeführt wie die Profilteile, bspw. als H-, X-, Sternförmiges Profil mit im Wesentlichen radial nach außen ragenden Rippen. Auch bei dieser Ausführung werden die Reibrührschweißungen im Bereich der Überlappung Knotenblech - Hohlprofil entlang der Rippen des im jeweiligen Hohlprofils steckenden Endes des Knotengussteils ausgeführt.

Weiterbildungen der Erfindung sind in den abhängigen Ansprüchen, der Beschreibung sowie den beigefügten Zeichnungen angegeben.

### Kurzbeschreibung der Zeichnungen

Die Erfindung wird im Folgenden beispielhaft unter Bezugnahme auf die Zeichnungen beschrieben.
- Fig. 1: eine Verbindung von drei Hohlprofilen mit eingesetzten Profilstücken sowie zwei Knotenblechen - in perspektivischer Darstellung.
- Fig. 2: einen Schnitt durch ein Ende eines Hohlprofiles in dem Bereich, wo dieses von zwei Knotenblechen umfasst ist - mit dem eingesetzten Profilstück sowie den durch Reibrührschweißen erzeugten Verbindungen.
- Fig. 3: einen in Erstreckungsrichtung eines Hohlprofils verlaufenden Schnitt in dessen Endbereich mit dem eingesetzten Profilteil.
- Fig. 4: ein Profilteil mit einem als Aufweitung ausgeführten Rand in perspektivischer Darstellung.
- Fig. 5: die in die Hohlprofile eingesetzten Profilteile mit als Aufweitung ausgeführtem Rand mit den Knotenblechen in perspektivischer Darstellung.
- Fig. 6a,b: eine weitere Ausführung der Erfindung, bei der neben den Knotenblechen ein als Gussteil ausgeführtes Knotenteil vorgesehen ist.
- Fig. 7: einen Schnitt durch das Hohlprofil mit einem eingesteckten Ende des Knotenteils sowie den Knotenblechen und den durch Reibrührschweißen ausgeführten Verbindungen.
- Fig. 8: eine nicht erfindungsgemäße Ausführungsform, bei der ein oder mehrere der Hohlprofile im Inneren eine Verrippung aufweisen.
- Fig. 9: einen Schnitt durch das verrippte Hohlprofil mit den angesetzten Knotenblechen sowie den Reibrührschweißungen bzw. Reibrührschweißverbindungen.
- Fig.10: die Fixierung zusätzlicher Bleche an dem als Strangpressprofil ausgebildeten Hohlprofil sowie eine Beplankung mit einem weiteren Blech.
- Fig. 11: Die Anbringung eines Gerätes, einer Einrichtung an einem als Strangpressprofil ausgebildeten Hohlprofil.

### Detaillierte Beschreibung der Erfindung

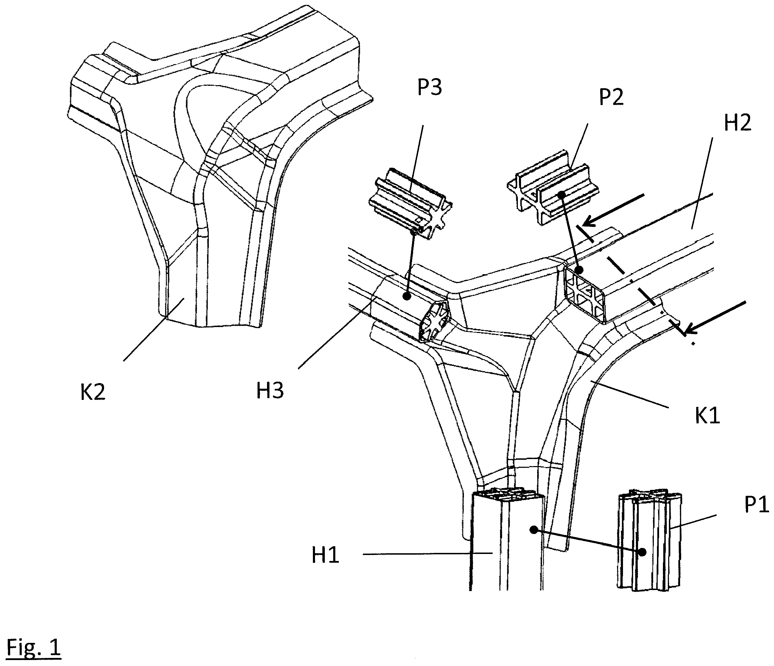

Figur 1 zeigt eine Verbindung von drei Hohlprofilen H1, H2, H3 mit eingesetzten Profilstücken P1, P2, P3 sowie zwei Knotenblechen K1, K2 - in perspektivischer Darstellung. Das Knotenblech K1 ist hierbei von unten an die drei Endbereiche der Hohlprofile H1, H2, H3 angesetzt und in Kontakt mit diesen. Das zweite, von oben anzusetzende Knotenblech K2 ist noch nicht in der endgültigen Position.

In die offenen Enden der Hohlprofile H1, H2, H3 sind als Strangpressteile gefertigte Profilstücke P1, P2, P3 eingesetzt. In der Figur 1 sind diese Profilstücke P1, P2, P3 sowohl in das jeweilige Ende eingesetzt als auch separat in einer Position neben den zugehörigen Ende des Hohlprofilteils H1, H2, H3 dargestellt. Die Hohlprofile H1, H2, H3 haben unterschiedlichen Querschnitt und entsprechend sind die einzusetzenden Profilstücke P1, P2, P3 als unterschiedlich gerippte Profile ausgebildet.

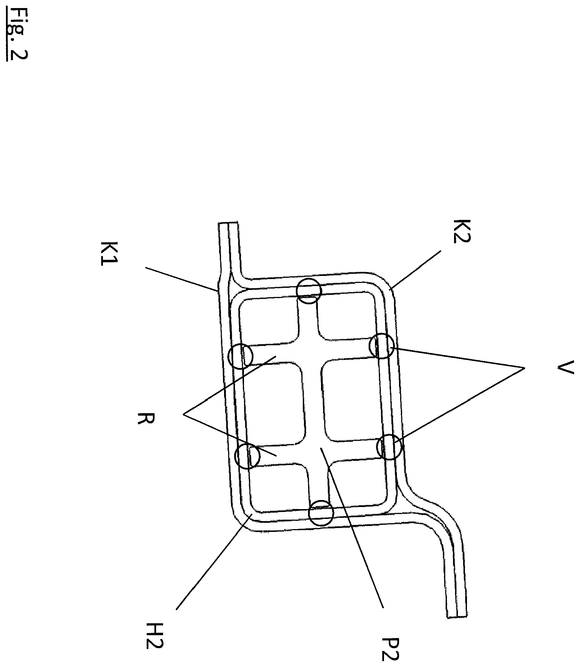

Figur 2 zeigt einen Schnitt durch ein Ende des Hohlprofiles H2 in dem Bereich, wo dieses von den beiden Knotenblechen K1, K2 umfasst ist. In Figur 1 ist der Schnitt sowie die Betrachtungsrichtung angegeben. Das eingesetzte Profilstück P2 sowie die durch das Reibrührschweißen erzeugten Verbindungen V sind wiedergegeben. Die durch Reibrührschweißen erzeugten Verbindungen V sind als linienförmige oder punktuelle Schweißungen entlang der Rippen R des Profilteils P2 ausgeführt und verbinden das Knotenblech K1 bzw. K2, das Hohlprofil H2 sowie die innenseitig das Hohlprofil H2 kontaktierende Rippe R des Profilteils P2.

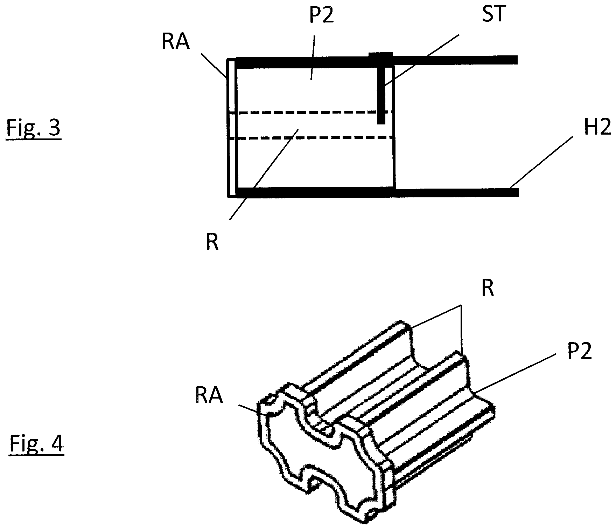

Figur 3 zeigt einen in Erstreckungsrichtung des Hohlprofils H2 verlaufenden Schnitt im Endbereich mit dem eingesetzten Profilteil P2. Das Profilteil P2 ist mittels Stift oder Schraube ST fixiert und so gegen ein Herausfallen gesichert. Das Profilteil P2 weist an seinem einen Ende eine Aufweitung, einen erweiterten Rand RA als Blähformteil ausgeführt, auf. Dieser Rand RA dient als Anschlag für das Profilteil P2 beim Einführen in das Hohlprofil H2 und verhindert ein Durchrutschen, ein Hineinfallen des Profilteils P2 in das Hohlprofil beim Einsetzen und vor dem Fixieren mit der Sicherung ST.

Die Figur 4 zeigt das Profilteil P2 mit dem als Aufweitung ausgeführten Rand RA in perspektivischer Darstellung.

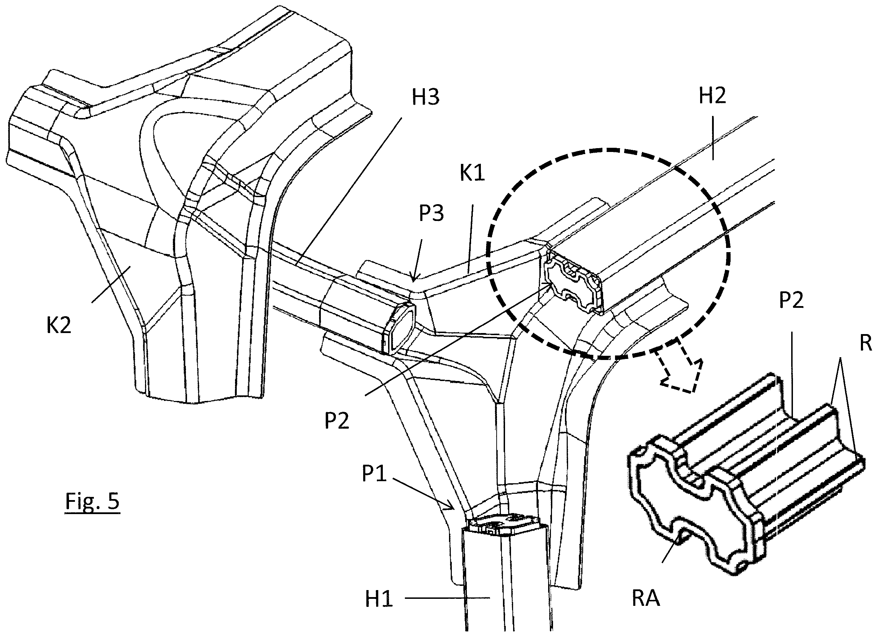

In Figur 5 ist eine Hohlprofilverbindung mit zwei Knotenblechen K1, K2 und drei Hohlprofilen H1, H2, H3 dargestellt. In die Enden der Hohlprofile H1, H2, H3 sind Profilteile P1, P2, P3 mit jeweils einem als Aufweitung ausgebildeten Rand RA eingesetzt. Das in das Hohlprofilteil H2 eingesetzte Profilteil P2 mit dem Rand RA - ausgeführt wie in Figur 4 - ist zusätzlich vergrößert wiedergegeben.

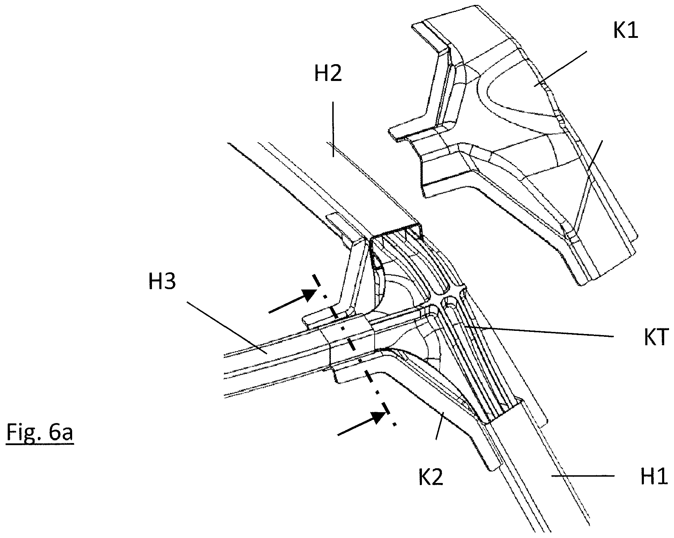

In Figur 6a ist eine weitere Ausführung der Erfindung wiedergegeben, bei der neben den Knotenblechen K1, K2 ein Knotenteil KT, ausgeführt als Gussteil, mit den als profiliert ausgeführten Enden in die Hohlprofile H1, H2, H3 eingesteckt sind.

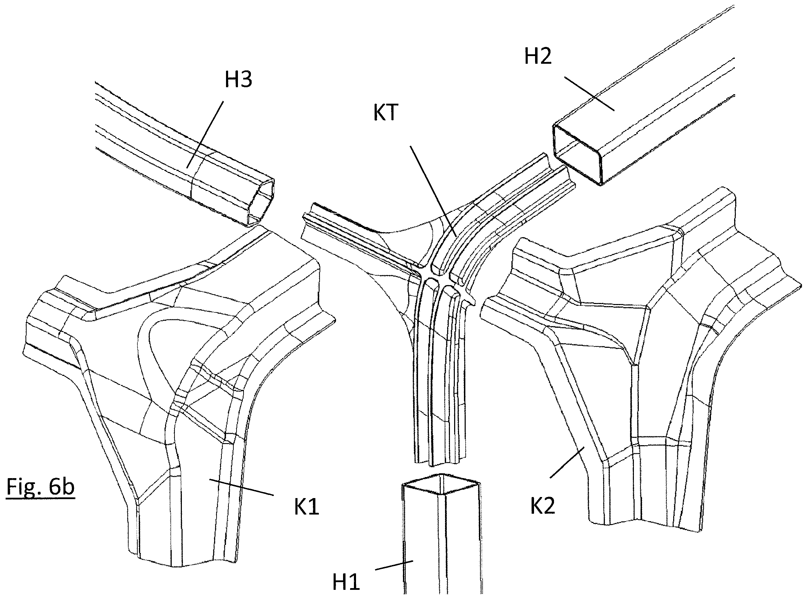

In Figur 6b sind die Teile - die Hohlprofile H1, H2, H3, die Knotenbleche K1, K2 sowie das Knotenteil nach Art einer Explosionsdarstellung wiedergegeben. Insgesamt sind auch die den Hohlprofilen H1 und H2 zugewandten Enden des Knotenteils KT stärker gewinkelt - die Hohlprofile H1 und H2 stehen im Wesentlichen unter einem rechten Winkel zueinander.

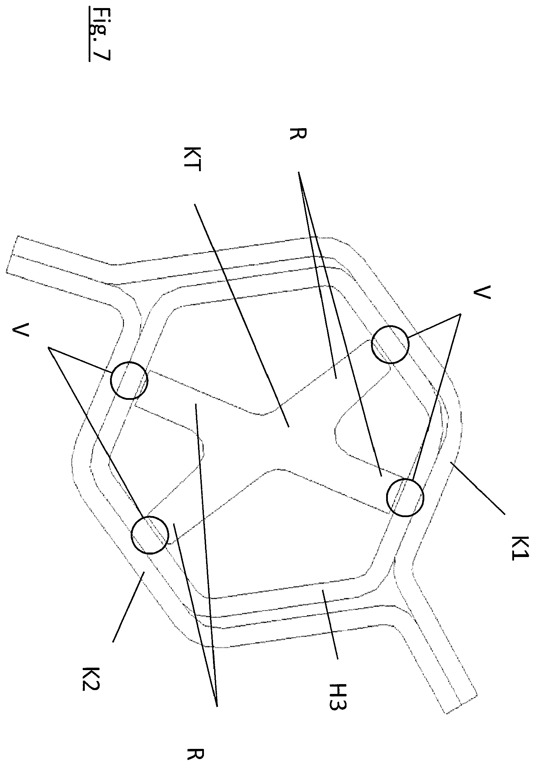

Figur 7 zeigt den in Figur 6a markierten Schnitt durch das Hohlprofil H3 mit dem eingesteckten Ende des Knotenteils KT. Die durch Reibrührschweißen erzeugten Verbindungen V - die Schweißverbindungen bzw. Reibrührschweißverbindungen - sind entlang der Rippen R des Profilteils P2 ausgeführt. Durch die Verbindungen V werden die Knotenbleche K1, K2, das Hohlprofil H3 sowie das Knotenteil KT mittels seiner Rippen R verbunden.

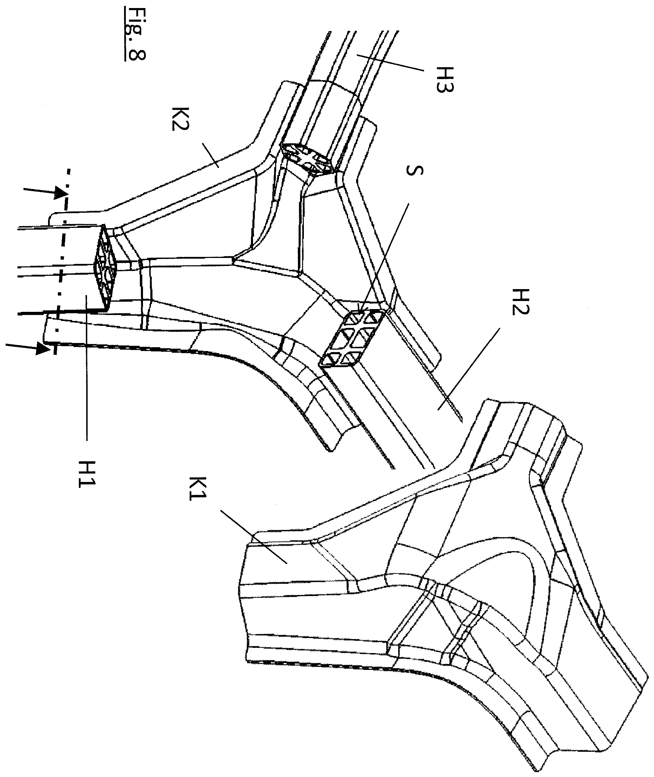

Die in Figur 8 wiedergegebene Ausführungsform der Erfindung verwendet Hohlprofile H1, H2, H3, welche bereits eine als Stege ausgebildete innere Verrippung aufweisen und so einzelne Hohlkammern bilden. Die Hohlprofile H1, H2, H3 sind als Strangpressprofile ausgeführt und werden in der bereits beschriebenen Weise mit zwei Knotenblechen K1, K2 verbunden. Die durch Reibrührschweißen ausgeführten Verbindungen V zwischen den Knotenblechen K1, K2 und dem Hohlprofilen H1, H2, H3 verlaufen im Bereich und entlang der die Verrippung bildenden Streben bzw. Stege S.

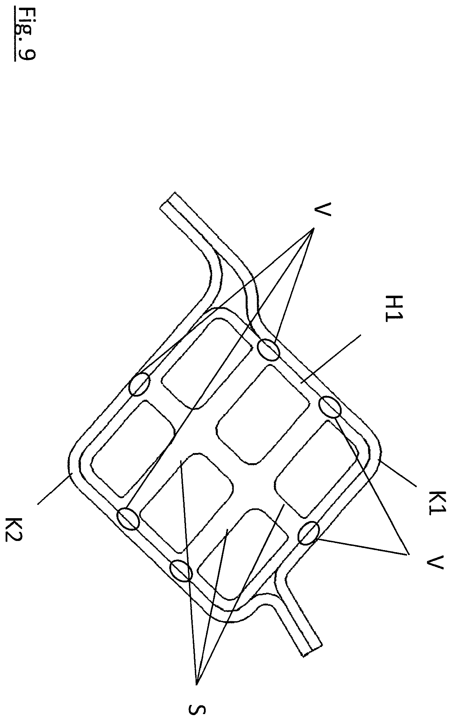

Figur 9 gibt den in der Figur 8 dargestellten Schnitt durch das als Strangpressprofil ausgeführte Hohlprofil mit den Knotenblechen K1, K2 sowie den im Bereich und entlang der Stege S ausgeführten und durch Reibrührschweißen erzeugten Verbindungen V im Detail wieder. Diese sind im Bereich und entlang der die Verrippung bildenden Stege S ausgeführt.

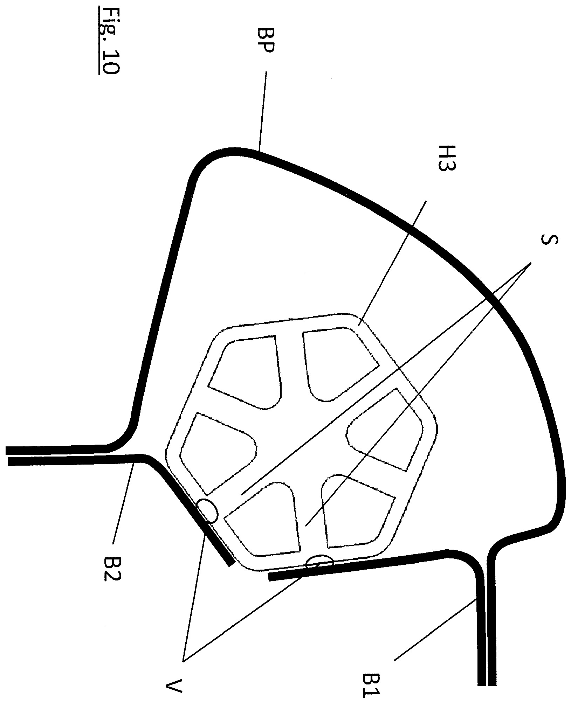

Die Verwendung von profilierten Hohlprofilen in Form von Strangpressprofilen ermöglicht eine zusätzliche Fixierung weiterer Karosserieteile an einem oder mehreren der Hohlprofile. Figur 10 zeigt die Anbringung von zwei Halteblechen B1, B2 an dem profilierten Hohlprofil H3 - bspw. wie dieses in Figur 9 dargestellt ist. Die Bleche B1, B2 sind mittels je einer durch Reibrührschweißen erzeugten Verbindung V an dem Hohlprofil H3 angebracht, wobei die Verbindungen V genau in dem Bereich ausgeführt sind, in dem der Steg S der Verrippung, des Hohlprofils H3 von innen an die Außenkontur mündet. Die Verbindung verläuft ebenfalls in Richtung des Hohlprofils H2, also des Steges S.

An die beiden Bleche B1, B2 ist ein das Hohlprofil H3 verkleidendes Beplankungsblech BP angebracht. Als Verbindung kommt hier ebenfalls eine Reibrührschweißverbindung, aber auch eine Punktschweißung oder eine Stanznietverbindung in Frage.

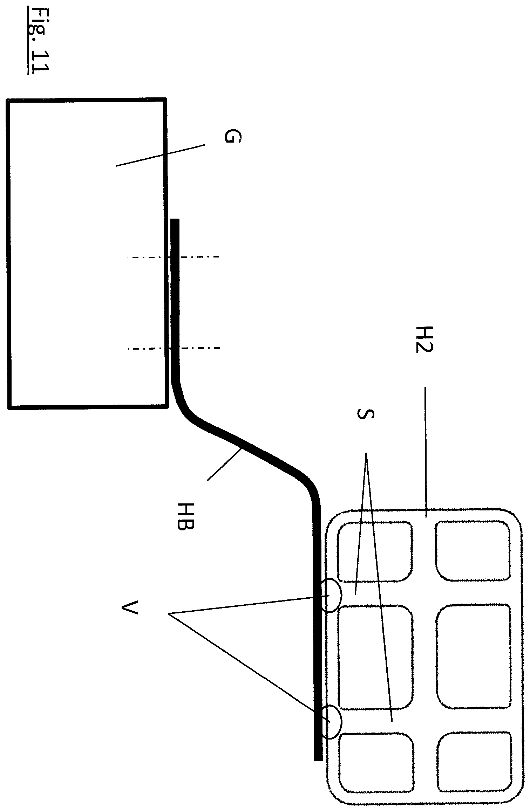

Die Figur 11 zeigt eine weitere, die vorliegende Erfindung weiterbildende Maßnahme, bei der ein Gerät, z.B. ein elektronisches Steuergerät, mittels eines Haltebleches HB an dem als Strangpressprofil ausgebildeten Hohlprofil H2 (wie in Figur 8 dargestellt) angebracht wird. Das Halteblech HB ist mittels zwei Verbindungen, durch Reibrührschweißen ausgeführt, mit dem Hohlprofil verbunden. Die Verbindungen V sind genau in dem Bereich ausgeführt, in dem der Steg S der Verrippung, des Hohlprofils H3 von innen an die Außenkontur mündet. Die Verbindung verläuft ebenfalls in Richtung des Hohlprofils H2, also des Steges S.

### Bezugszeichenliste

- H1: Hohlprofil
- H2: Hohlprofil
- H3: Hohlprofil
- K1: Knotenblech
- K2: Knotenblech
- P1: Profilteil
- P2: Profilteil
- P3: Profilteil
- R: Rippe
- S: Steg
- RA: Rand
- ST: Stift
- KT: Knotenteil
- V: Verbindung - durch Reibrührschweißen
- B1: Blech, Karosserieteil
- B2: Blech, Karosserieteil
- BP: Beplankung, Beplankungsblech
- HB: Halteblech
- G: Gerät, Einrichtung, Steuergerät

## Patentansprüche

1. Hohlprofilverbindung zur Verbindung von wenigstens zwei Hohlprofilen (H1, H2, H3), mit einem Knotenblech (K1, K2), welches die Endbereiche der zu verbindenden Hohlprofile (H1, H2, H3) in deren Außenbereich kontaktiert, wobei zumindest die Endbereiche der Hohlprofile (H1, H2, H3) rohrförmig ausgestaltet sind, mit einem einsetzbaren, Rippen (R) aufweisenden Profilteil (P1, P2, P3), so dass die Endbereiche der Hohlprofile (H1, H2, H3) im Querschnitt ein durch Stege bzw. Rippen (S, R) gebildetes Profil aufweisen, wobei Knotenblech (K1, K2) und Hohlprofil (H1, H2, H3) durch eine Reibrührschweißverbindung miteinander verbunden sind, wobei die durch Reibrührschweißen erzeugten Verbindungen (V) entlang der Rippen bzw. Stege (S, R) des Profils verlaufen.

2. Hohlprofilverbindung nach Anspruch 1, **dadurch gekennzeichnet, dass** das Profilteil (P1, P2, P3) als ein im Wesentlichen X-, H, oder sternförmiges Teil ausgeführt ist.

3. Hohlprofilverbindung nach Anspruch 1, **dadurch gekennzeichnet, dass** das Profilteil (P1, P2, P3) im Hohlprofil (H1, H2, H3) mittels eines Befestigungsmittels in Form eines Stiftes oder einer Schraube fixiert ist.

4. Hohlprofilverbindung nach Anspruch 1, **dadurch gekennzeichnet, dass** das Profilteil (P1, P2, P3) einen Randbereich (RA) aufweist, welcher als Anschlag beim Einführen des Profilteils (P1, P2. P3) in das Hohlprofil (H1, H2, H3) dient.

5. Hohlprofilverbindung nach Anspruch 1, **dadurch gekennzeichnet, dass** die Hohlprofile (H1, H2, H3) durch zwei nach Art von Halbschalen zusammengesetzte Knotenbleche (K1, K2) verbunden werden.

6. Hohlprofilverbindung nach Anspruch 1, **dadurch gekennzeichnet, dass** in die Endbereiche der Hohlprofile (H1, H2, H3) die verrippten Enden eines die Hohlprofile (H1, H2, H3) zusätzlich verbindenden Knotenteils (KT) eingeführt sind.

7. Hohlprofilverbindung nach Anspruch 6, **dadurch gekennzeichnet, dass** das Knotenteil (KT) als ein Gußteil, vorzugsweise aus Aluminium, ausgeführt ist.

8. Hohlprofilverbindung nach Anspruch 1, **dadurch gekennzeichnet, dass** die Hohlprofile (H1, H2, H3) als Strangpressprofilteile ausgeführt sind.

9. Hohlprofilverbindung nach Anspruch 1, **dadurch gekennzeichnet, dass** die Profilteile (P1, P2, P3) als Strangpressprofilteile ausgeführt sind.

10. Hohlprofilverbindung nach Anspruch 1, **dadurch gekennzeichnet, dass** die Hohlprofile (H1, H2, H3) aus Aluminium oder einer Aluminiumlegierung ausgeführt sind.

11. Hohlprofilverbindung nach Anspruch 1, **dadurch gekennzeichnet, dass** die Profilteile (P1, P2, P3) aus Aluminium oder einer Aluminiumlegierung ausgeführt sind.

12. Hohlprofilverbindung nach Anspruch 8, **dadurch gekennzeichnet, dass** an das Hohlprofil (H1, H2, H3) im Bereich und entlang der die Verrippung bildenden Stege (S) mittels durch Reibrührschweißen ausgeführten Verbindungen (V) weitere Bleche (B1, B2), insbesondere Karosserieteile angebracht sind.

13. Hohlprofilverbindung nach Anspruch 8, **dadurch gekennzeichnet, dass** an das Hohlprofil (H1, H2, H3) im Bereich und entlang der die Verrippung bildenden Stege (S) mittels durch Reibrührschweißen ausgeführten Verbindungen (V) ein als Halteblech (HB) ausgeführter Halter für ein Gerät, insbesondere ein elektronisches Steuergerät angebracht ist.

## Claims

1. Hollow profile connection for connecting at least two hollow profiles (H1, H2, H3), with a gusset plate (K1, K2) which makes contact with the end regions of the hollow profiles (H1, H2, H3) to be connected, in the outer region thereof, wherein at least the end regions of the hollow profiles (H1, H2, H3) are of tubular configuration, with an insertable profile part (P1, P2, P3) having ribs (R), such that the end regions of the hollow profiles (H1, H2, H3) in cross section have a profile formed by webs or ribs (S, R), wherein gusset plate (K1, K2) and hollow profile (H1, H2, H3) are connected to each other by a friction-stir weld, wherein the connections (V) produced by friction-stir welding run along the ribs or webs (S, R) of the profile.

2. Hollow profile connection according to Claim 1,
**characterized in that**
the profile part (P1, P2, P3) is designed as a substantially X-, H- or star-shaped part.

3. Hollow profile connection according to Claim 1,
**characterized in that**
the profile part (P1, P2, P3) is fixed in the hollow profile (H1, H2, H3) by means of a fastening means in the form of a pin or a screw.

4. Hollow profile connection according to Claim 1,
**characterized in that**
the profile part (P1, P2, P3) has an edge region (RA) which serves as a stop when the profile part (P1, P2, P3) is inserted into the hollow profile (H1, H2, H3).

5. Hollow profile connection according to Claim 1,
**characterized in that**
the hollow profiles (H1, H2, H3) are connected by two gusset plates (K1, K2) fitted together in the manner of half shells.

6. Hollow profile connection according to Claim 1,
**characterized in that**
the ribbed ends of a gusset part (KT) additionally connecting the hollow profiles (H1, H2, H3) are inserted into the end regions of the hollow profiles (H1, H2, H3).

7. Hollow profile connection according to Claim 6,
**characterized in that**
the gusset part (KT) is designed as a cast part, preferably consisting of aluminium.

8. Hollow profile connection according to Claim 1,
**characterized in that**
the hollow profiles (H1, H2, H3) are designed as extruded profile parts.

9. Hollow profile connection according to Claim 1,
**characterized in that**
the profile parts (P1, P2, P3) are designed as extruded profile parts.

10. Hollow profile connection according to Claim 1,
**characterized in that**
the hollow profiles (H1, H2, H3) are formed from aluminium or an aluminium alloy.

11. Hollow profile connection according to Claim 1,
**characterized in that**
the profile parts (P1, P2, P3) are formed from aluminium or an aluminium alloy.

12. Hollow profile connection according to Claim 8,
**characterized in that**
further plates (B1, B2), in particular body parts, are attached to the hollow profile (H1, H2, H3) in the region of and along the webs (S) forming the ribbing by means of connections (V) formed by friction-stir welding.

13. Hollow profile connection according to Claim 8,
**characterized in that**
a holder which is designed as a holding plate (HB) and is intended for a device, in particular an electronic control device, is attached to the hollow profile (H1, H2, H3) in the region of and along the webs (S) forming the ribbing by means of connections (V) formed by friction-stir welding.

## Revendications

1. Liaison à profil creux pour la liaison d'au moins deux profilés creux (H1, H2, H3), comprenant une tôle d'assemblage (K1, K2) qui met en contact les régions d'extrémité des profilés creux (H1, H2, H3) à assembler dans leur région extérieure, au moins les régions d'extrémité des profilés creux (H1, H2, H3) étant réalisées sous forme tubulaire, avec une partie profilée (P1, P2, P3) insérable, présentant des ailettes (R), de telle sorte que les régions d'extrémité des profilés creux (H1, H2, H3) présentent, en section transversale, un profil formé par des nervures ou des ailettes (S, R), la tôle d'assemblage (K1, K2) et le profilé creux (H1, H2, H3) étant assemblés l'un à l'autre par une liaison par soudage par friction-malaxage, les connexions (V) produites par le soudage par friction-malaxage s'étendant le long des ailettes ou des nervures (S, R) du profilé.

2. Liaison à profil creux selon la revendication 1, **caractérisée en ce que** la partie profilée (P1, P2, P3) est réalisée sous forme de partie essentiellement en forme de X, de H ou d'étoile.

3. Liaison à profil creux selon la revendication 1, **caractérisée en ce que** la partie profilée (P1, P2, P3) est fixée dans le profilé creux (H1, H2, H3) au moyen d'un moyen de fixation sous forme de goupille ou de vis.

4. Liaison à profil creux selon la revendication 1, **caractérisée en ce que** la partie profilée (P1, P2, P3) présente une région de bord (RA) qui sert de butée lors de l'insertion de la partie profilée (P1, P2. P3) dans le profilé creux (H1, H2, H3).

5. Liaison à profil creux selon la revendication 1, **caractérisée en ce que** les profilés creux (H1, H2, H3) sont assemblés par deux tôles d'assemblage (K1, K2) assemblées à la manière de demi-coques.

6. Liaison à profil creux selon la revendication 1, **caractérisée en ce que** les extrémités munies d'ailettes d'une partie de noeud (KT) reliant en outre les profilés creux (H1, H2, H3) sont introduites dans les régions d'extrémité des profilés creux (H1, H2, H3).

7. Liaison à profil creux selon la revendication 6, **caractérisée en ce que** la partie de noeud (KT) est réalisée sous forme de pièce coulée, de préférence en aluminium.

8. Liaison à profil creux selon la revendication 1, **caractérisée en ce que** les profilés creux (H1, H2, H3) sont réalisés sous forme de pièces profilées extrudées.

9. Liaison à profil creux selon la revendication 1, **caractérisée en ce que** les pièces profilées (P1, P2, P3) sont réalisées sous forme de pièces profilées extrudées.

10. Liaison à profil creux selon la revendication 1, **caractérisée en ce que** les profilés creux (H1, H2, H3) sont réalisés en aluminium ou en alliage d'aluminium.

11. Liaison à profil creux selon la revendication 1, **caractérisée en ce que** les pièces profilées (P1, P2, P3) sont réalisées en aluminium ou en alliage d'aluminium.

12. Liaison à profil creux selon la revendication 8, **caractérisée en ce que** des tôles supplémentaires (B1, B2), en particulier des pièces de carrosserie, sont montées sur le profilé creux (H1, H2, H3) dans la région et le long des nervures (S) formant les ailettes au moyen d'assemblages (V) réalisés par soudage par friction-malaxage.

13. Liaison à profil creux selon la revendication 8, **caractérisée en ce qu'**un support pour un appareil, en particulier un appareil de commande électronique, réalisé sous forme de tôle de fixation (HB), est monté sur le profilé creux (H1, H2, H3) dans la région et le long des nervures (S) formant les ailettes au moyen d'assemblages (V) réalisés par soudage par friction-malaxage.
